# EUROPEAN PATENT APPLICATION

(11) **EP 4 736 661 A1**
(43) Date of publication of application: **06.05.2026**
(21) Application number: 24831113.6
(22) Date of filing: 19.06.2024
(51) Int. Cl.: A23F 3/10

(54) **METHOD FOR PREPARING A FERMENTED BEVERAGE AND FERMENTED BEVERAGE PRODUCED BY SAID METHOD**

(30) Priority: 27.06.2023 ES 202330532
(71) Applicant: Darwin Bioprospecting Excellence S.L., 46980 Paterna (Valencia) (ES)
(72) Inventor: PORCAR MIRALLES, Manuel, 46980 Paterna (Valencia) (ES); VILANOVA SERRADOR, Cristina, 46980 Paterna (Valencia) (ES); GIMENO VALERO, Helena, 46980 Paterna (Valencia) (ES); BORREGO PIQUER, Marta, 46980 Paterna (Valencia) (ES); SANZ LÓPEZ, Carmen, 46980 Paterna (Valencia) (ES)
(74) Representative: Ibarra Garcia, Isabel
(86) International application number: PCT/ES2024/070385
(87) International publication number: WO 2025/003539

(57) **Abstract**

The invention relates to a method of preparing a fermented beverage from tea or rooibos together with a carbon source, which contemplates the sequential addition of a lactic acid bacterium and a yeast, such that two independent fermentations occur with a simplified microbial consortium, whereas the claimed method has a duration of less than 7 days. Advantageously, the method of the invention allows manufacturing times to be reduced, and the characteristics of the beverage obtained to be personalised in an optimal manner. The fermented beverage obtained is also an object of the invention.

## Description

### OBJECT OF THE INVENTION

The present invention relates to a method of preparing a fermented beverage, as well as to the fermented beverage obtained by said method.

Namely, the method of the invention is based on a controlled and sequential fermentation from tea or rooibos using a simplified microbial consortium based on at least one bacterium and one yeast, which advantageously allows manufacturing times to be reduced to times of less than 7 days, and guarantees that the quality and characteristics of the fermented beverage obtained are fully reproducible.

### BACKGROUND OF THE INVENTION

Beverages obtained from an infusion or plant extract in which fermentation is carried out and which are particularly advantageous from a nutritional and organoleptic viewpoint are known in the state of the art.

Namely, fermented beverages of the kombucha family are known, which beverages are usually produced by means of fermenting black tea sweetened with sugar (or sweetened with honey or another type of sugary solution) with a complex microbial consortium of bacteria and yeasts that form a thick gelatinous-looking layer known as SCOBY (an acronym for Symbiotic Consortium of Bacteria and Yeast).

As mentioned above, said consortium is a complex combination of bacterial species (mainly acetic, but also lactic) and yeasts. Although the organoleptic properties of kombucha can vary greatly depending on the fermentation time, in general it is a beverage with a vinegary flavour due to the production of acetic acid.

Another example of well-known beverages of this type is jun, which is made from green tea instead of black tea and honey instead of sugar, resulting in a more bubbly and less acidic beverage than kombucha. In the case of jun, fermentation is also carried out by a complex SCOBY in which acetic fermentation predominates.

The complexity of the microbial community of the SCOBY used to obtain known fermented beverages results in the difficulty of standardising these beverages and, therefore, producing them on an industrial scale, as fermentation times are long (2-4 weeks) and fermentation is not easily reproducible, with large variations in the duration, acidity, sugar content, alcohol, or flavour of the end product.

Additionally, known fermented beverages have high acidity, so in order for them to be accepted by certain consumers, it is necessary to incorporate a high content of sugar, sweetener, or the like, which detracts from the quality of the beverage obtained.

Thus, the applicant for the present invention recognises the need to develop a simplified method in terms of the consortium of microorganisms used and the production time, which allows for the precise and reproducible selection of the characteristics of the fermented beverage obtained for its industrial-scale production.

### DESCRIPTION OF THE INVENTION

The method described below solves the drawbacks set forth above, such that it enables a fermented beverage to be obtained with the desired parameters in a minimum amount of time and with reproducible characteristics, facilitating its industrial production.

To that end, the method developed in the present invention is based on a controlled and sequential fermentation of a tea, a rooibos, or the like, using to that end a simplified microbial consortium made up of at least one bacterium and at least one yeast, based on the steps described below:
- Preparing a mixture of a tea, preferably green tea (although it could be any other type of tea) or rooibos infusion and a carbon source, such as sugar or honey, to obtain a must. It should be noted that the carbon source is a compound containing carbohydrates, such as refined sugar, cane sugar, or honey.
- Adding or inoculating at least one lactic acid bacterium for food use (GRAS/QPS) and fermenting for at least one day for the partial consumption of carbon by the lactic acid bacterium and the production of organic molecules, providing aromas, flavours, lactic acidity, etc. In the context of the present invention, GRAS/QPS refers to microbial safety standards, where GRAS is the acronym for 'Generally Recognised As Safe' used by the US FDA (Food and Drug Administration) to classify microorganisms considered safe from the food viewpoint, whereas QPS is the acronym for 'Qualified Presumption of Safety' used by the EFSA (European Food Safety Authority).
- Adding or inoculating a yeast for food use (GRAS/QPS) and fermenting for at least one day for the partial consumption of carbon by the yeast, generating an amount of CO₂ and alcohol and providing aromas, flavours, and acidity.

In this sense, the steps described in detail take place in a biorreactor or fermenter with a free exit of fermentation gas, such that the two steps of fermentation described in detail are carried out openly. Preferably, the biorreactor is provided with aeration means which allow the culture to be kept under optimal conditions for fermentation.

Additionally, it should be noted that, unlike the known processes for obtaining fermented beverages, the fermentation caused by the lactic acid bacterium and the fermentation caused by the yeast take place sequentially and are independent steps, such that, advantageously, the method has a duration of less than 7 days, preferably between 2 and 7 days, which represents a drastic reduction of the time for obtaining the beverage compared to the known processes, in which fermentation takes place between 2 and 4 weeks at the least.

Adjusting the amount of carbon source added and the fermentation time with each of the microorganisms allows an accurate control of the acidity and organoleptic characteristics of the end product, in addition to the amount of residual sugar or carbon and of alcohol in the fermented beverage obtained, with this standardisation and ability to control the product being a considerable advantage with respect to the known methods for obtaining fermented beverages.

Thus, by means of the method of the invention, a fermented beverage with a pH between 2.5 and 4.5 is obtained in a time that may vary depending on the content of alcohol, sugar, gas, or other compounds to be obtained in the end product, but always within one week at most.

As described in detail above, the addition of the lactic acid bacterium and the addition of the yeast take place sequentially, and therefore, the two fermentations are sequential and independent processes. The incorporation of a lactic acid bacterium and a yeast, in a minimum amount to achieve an optimal product from the organoleptic viewpoint, allows the process and its results to be reproduced, in contrast with known kombuchas in which the microbial consortium has multiple bacteria and/or yeasts that are all added together at the same time, which makes product scalability and reproducibility difficult. Thus, the method of the invention preferably uses 2 microorganisms at the least and 10 microorganisms at the most.

The bacterium used is preferably chosen from *Lactiplantibacillus plantarum, Lactiplantibacillus paraplantarum, Levilactobacillus brevis, Lacticaseibacillus paracasei, Lacticaseibacillus casei, Pediococcus pentosanes,* and/or *Pediococcus acidilactici,* whereas the yeast is also preferably chosen from *Saccharomyces spp, Bretanomyces, Zygosaccharomyces, Torulaspora, Lachancea,* and/or *Kluyveromyces.*

In relation to the order in which these microorganisms are inoculated sequentially, in a preferred embodiment of the invention, the addition of the lactic acid bacterium takes place before the addition of the yeast, such that fermentation with the lactic acid bacterium takes place before fermentation with the yeast.

However, it is possible to reverse the order of the mentioned steps, such that according to another embodiment of the invention, the addition of the yeast takes place before the addition of the lactic acid bacterium, such that fermentation with the yeast takes place before fermentation with the lactic acid bacterium.

Moreover, the use of a lactic acid bacterium instead of a bacterium that carries out acetic fermentation like in known kombuchas, allows for an improvement to the acidity profile and, in general, of the organoleptic qualities of the beverage. Furthermore, the lactic acid bacteria can have probiotic properties and improve overall health of the organism.

In the event that a more acetic profile is desired for the fermented beverage obtained by means of the present invention, the claimed method contemplates the optional addition of vinegar, long-fermented kombucha, and/or acetic acid. This addition can be performed both at the beginning and at the end of the method, even at both times. If the addition is performed at the end of the method, after the two sequential fermentations, it has the advantage of stopping the fermentation process, acting as a preservative and stabilising the product.

In a likewise optional manner, for the purpose of adapting the fermented beverage obtained to the preferences of each consumer, after the two open sequential fermentations, the addition of the following is contemplated:
- a sweetener to modify the residual sugar content to the consumer's taste, preferably xylitol, aspartame, erythritol, or steviol,
- flavourings, preferably: aromas, plant extracts, and/or spices, or
- probiotic microorganisms, preferably microorganisms from the genus *Bacillus.*
- carbon dioxide to adjust the amount of gas in the beverage to the preferences of each consumer.

Lastly, it should be noted that the method of the invention includes a final step in which the fermented beverage obtained is taken to a closed container where a third fermentation takes place. This closed third fermentation occurs in a residual manner based on the content of sugars from the carbon source that is available after the open two fermentations with the lactic acid bacterium and the yeast, generating most of the gas that the end product will contain. The final amount of gas in the fermented beverage to be consumed will be determined by the remaining fermentable sugar (from the initial carbon source or from the sweeteners added later) and the storage time thereof in the closed container, as well as by the amount of carbon dioxide added in an artificial manner.

Based on the above, the main advantages and novel aspects of the present invention can be summarised as follows:
- Organoleptic properties of the fermented beverage. The production of lactic acid instead of acetic acid as the end product of the fermentation process allows a beverage to be obtained with much more pleasant organoleptic characteristics, while at the same time maintaining the characteristic acidity of beverages of this type.
- Possibility of adding probiotic strains. As described in detail above, during the method of the invention, the strain or strains of lactic acid bacteria added allow the functional characteristics desired for the beverage to be varied, for example, to regulate intestinal transit, with antioxidant activity, with effects on the immune system, with the ability to synthesize vitamins, etc.
- Reproducibility. As described above, the production of kombucha or jun by means of conventional methods requires the use of a SCOBY to carry out the fermentation process. As this is a complex microbial community, the resulting product is not always reproducible due to unexpected and virtually impossible to control changes in the bacteria and yeasts making up this community. In contrast, the present development uses a simplified microbial consortium preferably made up of one bacterium and one yeast which are applied sequentially, which allows for much finer microbiological control of the fermentation process.
- Drastic reduction of fermentation time. The production of kombucha or jun typically requires between 7 and 30 days to complete the fermentation process. In the case of the present development, this time is reduced to 7 days at most as a result of the sequential addition of selected strains.
- SCOBY is not produced. The absence of acetic acid bacteria prevents the formation of a SCOBY, which is often hard to manage and difficult to standardise.

### PREFERRED EMBODIMENT OF THE INVENTION

An embodiment of the method claimed in the present invention is described in detail below.

Thus, according to said example, firstly, an infusion is prepared with 10 grams per litre of green tea and 80 grams of honey per litre of water, stirring the infusion periodically so that the water can impregnate all of the tea, to obtain a must.

Next, the bacterium or yeast inocula are prepared, depending on which one is to be added first. The inoculum can be fresh (from a liquid or plate culture) or freeze-dried format. In the case of a fresh inoculum, a solution is prepared in 0.9% saline solution, measuring the optical density at 600 nm and adjusting it to the desired concentration. In case of a freeze-dried format, the amount to be inoculated is weighed.

When the must reaches a temperature between 30ºC-37ºC, the first microorganism for food use is added, i.e., the bacterium or the yeast is inoculated, according to the selected order. Optionally, if the initial pH of the must is to de adjusted, vinegar, long-fermented kombucha, or acetic acid can be added before this first addition.

Once the bacterium or the yeast has been added, the first fermentation begins, with a minimum duration of one day, at a temperature of about 30ºC. After the time of the first fermentation has elapsed, the inoculum is prepared and the second microorganism (the bacterium or the yeast, depending on which microorganism has been added first) is added, the second fermentation takes place for one day at the least, at a temperature of 30ºC.

Once fermentation has ended after the second addition, a fermented beverage is obtained with a pH between 2.5 and 4.5. Next, the acidity can be adjusted by means of adding vinegar or long-fermented kombucha, and the sweetness can be adjusted by means of adding an artificial sweetener (xylitol, erythritol, steviol, etc.). Lastly, the beverage is taken to a closed hermetic container and a third fermentation takes place.

## Claims

1. A method of preparing a fermented beverage comprising the steps of:
- preparing a mixture of a tea or rooibos infusion and a carbon source to obtain a must,
- adding at least one lactic acid bacterium for food use (GRAS/QPS) and fermenting for at least one day for the partial consumption of the carbon source and the production of organic molecules by the lactic acid bacterium,
- adding a yeast for food use (GRAS/QPS) and fermenting for at least one day for the partial consumption of carbon by the yeast, generating CO₂ and alcohol,
**characterised in that** the steps described in detail take place in a biorreactor with a free exit of fermentation gas, such that the fermentation caused by the lactic acid bacterium and the fermentation caused by the yeast are carried out openly and take place sequentially, being independent steps, whereas the steps of the fermentation method take place in less than 7 days, allowing a fermented beverage with a pH between 2.5 and 4.5 to be obtained.

2. The method of preparing a fermented beverage according to claim 1, **characterised in that** the addition of the lactic acid bacterium takes place before the addition of the yeast, such that fermentation with the lactic acid bacterium takes place before fermentation with the yeast.

3. The method of preparing a fermented beverage according to claim 1, **characterised in that** the addition of the yeast takes place before the addition of the lactic acid bacterium, such that fermentation with the yeast takes place before fermentation with the lactic acid bacterium.

4. The method of preparing a fermented beverage according to any of the preceding claims, **characterised in that** the biorreactor is provided with aeration means.

5. The method of preparing a fermented beverage according to any of the preceding claims, **characterised in that** the fermented beverage is taken to a closed container where a third fermentation takes place.

6. The method of preparing a fermented beverage according to claim 1, **characterised in that** the carbon source is honey or sugar.

7. The method of preparing a fermented beverage according to claim 1, **characterised in that** the tea is green tea.

8. The method of preparing a fermented beverage according to claim 1, **characterised in that** after the open fermentations, a sweetener, preferably xylitol, aspartame, erythritol, or steviol, is added.

9. The method of preparing a fermented beverage according to claim 1, **characterised in that** after the open fermentations, carbon dioxide is added.

10. The method of preparing a fermented beverage according to claim 1, **characterised in that** vinegar, long-fermented kombucha, and/or acetic acid is added.

11. The method of preparing a fermented beverage according to claim 1, **characterised in that** the bacterium used is preferably chosen from *Lactiplantibacillus plantarum, Lactiplantibacillus paraplantarum, Levilactobacillus brevis, Lacticaseibacillus paracasei, Lacticaseibacillus casei, Pediococcus pentosaceus,* and/or *Pediococcus acidilactici.*

12. The method of preparing a fermented beverage according to claim 1, **characterised in that** the added yeast is preferably chosen from *Saccharomyces spp, Bretanomyces, Zygosaccharomyces, Torulaspora, Lachancea, and*/*or Kluyveromyces.*

13. The method of preparing a fermented beverage according to claim 1, **characterised in that** flavouring are added, preferably: aromas, plant extracts, and/or spices.

14. The method of preparing a fermented beverage according to claim 1, **characterised in that** probiotic microorganisms, preferably microorganisms from the genus *Bacillus,* are added after the open fermentations.

15. A fermented beverage obtained according to the method described in any of the preceding claims, **characterised in that** it has a pH between 2.5 and 4.5.
